# FASCICULE DE BREVET EUROPEEN

(11) **EP 0 387 123 B1**
(45) Date de publication et mention de la délivrance du brevet: **14.04.1993**
(21) Numéro de dépôt: 90400500.6
(22) Date de dépôt: 23.02.1990
(51) Int. Cl.: F02K 1/82, F23R 3/00

(54) **Chemise de protection thermique pour canal chaud de turboréacteur**
Thermische Schutzauskleidung für das heisse Rohr eines Turboluftstrahltriebwerkes
Thermic protection liner for hot pipe of turbo-jet engine

(30) Priorité: 08.03.1989 FR 8903020
(43) Date de publication de la demande: 12.09.1990
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Veau, Albert Léon Pierre, F-77380 Combs-La-Ville (FR)
(74) Mandataire: Moinat, François

(56) Documents cités:
- CH-A- 344 262
- GB-A- 2 172 987
- US-A- 4 480 436
- US-A- 4 614 082

## Description

Le secteur technique de la présente invention est celui des turbomachines d'aviation et plus particulièrement des chemises de protection thermique disposées à l'intérieur des parties chaudes telles qu'un canal de post combustion, ou un canal de transition situé entre la partie circulaire du canal du flux chaud en aval de la turbine et une tuyère bidimensionnelle, ou même encore une paroi de chambre de combustion principale de turbomachine.

Il est connu pour ces diverses parties de la turbomachine de réaliser les chemises de protection thermique sous forme de tuiles disposées côte à côte ou à chevauchement pour former des anneaux eux-mêmes disposés bout à bout d'amont en aval pour réaliser une structure cylindrique de protection thermique que l'on dispose à l'intérieur du canal à protéger de façon à laisser s'écouler entre ladite structure et le canal à protéger un courant d'air sous pression relativement plus froid que celui s'écoulant à l'intérieur de ladite structure, celle-ci étant réalisée dans un matériau apte à supporter de très fortes températures.

Le document FR-A 2 567 250 décrit ainsi une structure de chambre de combustion dont la paroi chaude, structurelle, reçoit des tuiles formant la paroi froide, lesdites tuiles ayant leur bord amont engagé dans une rainure de la paroi chaude tandis que leur bord aval comporte intérieurement une partie repliée venant s'engager dans une seconde gorge circulaire de la paroi chaude. Ce dispositif nécessite pour son maintien un jonc circulaire en partie aval.

Le document US-A 4 614 082 décrit un autre type de structure voisine dans lequel les tuiles comportent également des crochets coopérant avec des rainures mais nécessitant pour leur maintien des goupilles radiales.

Le document US-A 4 480 436 décrit une chemise de protection thermique de chambre de combustion formée de panneaux emboîtés les uns dans les autres circulairement par rainures et languettes et comportant une rainure amont et une rainure aval coopérant avec des languettes en crochet de la paroi froide sur laquelle il viennent se glisser.

Là encore, il s'agit de réaliser dans une chambre de combustion une double paroi afin qu'entre les deux parois on puisse assurer un courant de ventilation de la paroi externe à refroidir.

Le document GB-A 2.172.987 décrit également une chemise de protection thermique de chambre de combustion. Mais cette chemise est constituée d'anneaux cylindriques monoblocs dont on a pu vérifier qu'ils posaient des problèmes de maintenance, notamment de stockage et d'interchangeabilité.

La présente invention a pour but de simplifier ce type de structure de chemise de protection thermique en réalisant une chemise à simple paroi suffisemment rigide pour être efficace à toutes les températures de fonctionnement, tout en étant de fabrication et de montage simple, c'est à dire excluant les solutions à recouvrement de tuiles, mais tout en permettant néanmoins la création de film pariétal de refroidissement de la paroi interne chaude de la chemise de protection.

La chemise de protection thermique selon l'invention est telle que chaque tuile est constituée d'un panneau en forme de portion de cylindre comportant à ses bords amont et aval des surépaisseurs radialement externes et disposées circonférentiellement pour former un raidisseur annulaire, lesdites surépaisseurs amont comportant sur leur face radiale amont un moyen mâle de fixation et d'étanchéité coopérant avec un moyen femelle complémentaire de fixation et d'étanchéité porté par la face radiale aval de la surépaisseur aval de la tuile amont adjacente.

Selon d'autres caractéristiques essentielles de l'invention, les deux bords latéraux de chaque tuile comportent une rainure longitudinale s'étendant de l'amont à l'aval pour recevoir une barrette intermédiaire de maintien comportant une extrémité pliée à l'équerre, ladite barrette étant repliée après montage dans les rainures de deux tuiles adjacentes, et la surépaisseur annulaire aval de chaque tuile comporte, sur son bord circulaire externe des inserts filetés aptes à recevoir des vis de fixation de chaque tuile sur le carter du turboréacteur.

Selon une première variante de réalisation, le moyen mâle de fixation et d'étanchéité est constitué par une protubérance amont en forme de bourrelet circulaire portée par la face amont de la surépaisseur amont, ledit bourrelet coopérant avec une rainure annulaire de la face aval de la surépaisseur aval de la tuile amont adjacente.

Selon une seconde variante de réalisation le moyen mâle de fixation et d'étanchéité est constitué par un joint métallique rapporté dans une rainure annulaire de la surépaisseur amont et coopérant avec une rainure annulaire de la face aval de la surépaisseur aval de la tuile amont adjacente.

D'autre caractéristiques et particularités de l'invention seront explicitées à la lumière de la description qui va suivre accompagnée des planches annexées pour lesquelles :
- la figure 1 montre en section longitudinale une chemise de protection thermique formée des tuiles selon l'invention.
- la figure 2 montre le détail de la première variante de réalisation indiquée plus haut.
- la figure 3 montre la seconde variante des moyens de fixation et d'étanchéité.
- la figure 4 est une vue en perspective de deux tuiles selon la seconde variante assemblées côte à côte au moyen d'une barrette selon l'invention dans un premier mode de réalisation.
- la figure 5 est une section longitudinale d'une tuile dont la barette est disposée suivant un second mode de réalisation de l'invention.
- la figure 6 montre une vue en perspective d'une partie de chemise de protection interne assemblée et fixée au carter.
- les figures 7 et 8 montrent un collier de montage d'un anneau formé des tuiles selon l'invention.

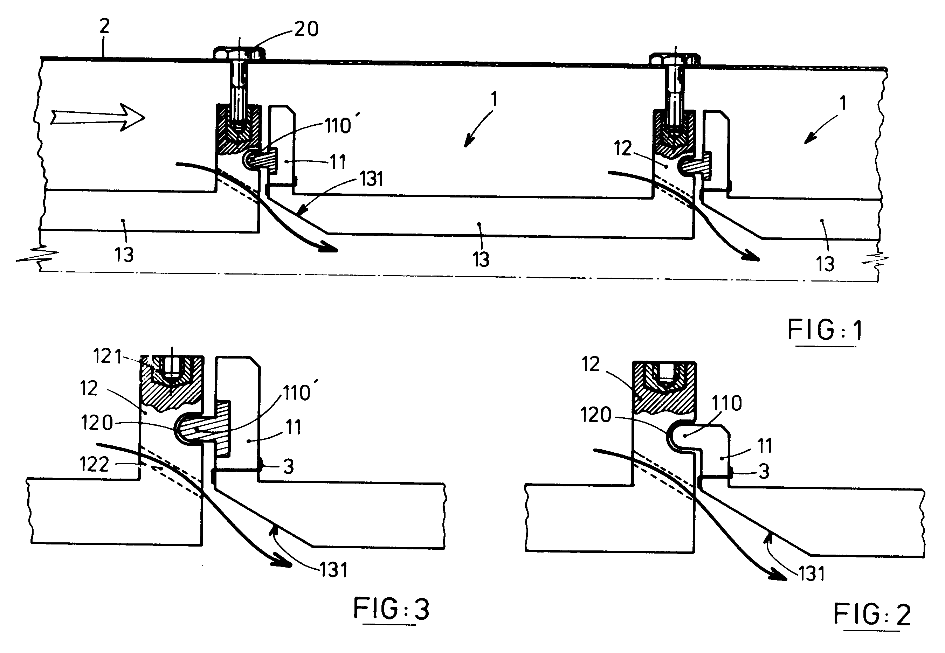

A la figure 1 on a représenté en coupe longitudinale un ensemble de trois tuiles 1 selon l'invention. Les tuiles sont formées d'un panneau 13 en forme de portion de cylindre dont les bords latéraux 10 sont parallèles entre eux et longitudinaux par rapport à l'axe du canal dans lequel les tuiles sont disposées.

Les bords amont et aval, également parrallèles entre eux comportent des surépaisseurs respectivement amont 11 et aval 12 sur la face convexe du panneau. Les surépaisseurs 11 et 12 ont une forme partiellement annulaire de telle sorte que, une fois les tuiles assemblées bord à bord en anneaux, les surépaisseurs 11 (respectivement 12) forment des raidisseurs annulaires pour la chemise.

Pour assurer l'assemblage bord à bord des tuiles d'un même anneau, les tuiles peuvent comporter selon un premier mode de réalisation (voir figures 1,2 et 4), des rainures longitudinales 111 réalisées sur les bords latéraux de la tuile à la base des surépaisseurs amont 11 et tangentes à la face externe convexe du panneau 13. Dans les rainures de deux tuiles adjacentes placées bord à bord, seront logées, par l'aval, des barrettes 3 comportant une partie aval repliée à l'équerre 30 contre la face aval de la surépaisseur amont 11.

Lors du montage, la partie amont de la barrette sera elle aussi repliée à l'équerre vers l'intérieur contre la face amont de la surépaisseur amont 11.

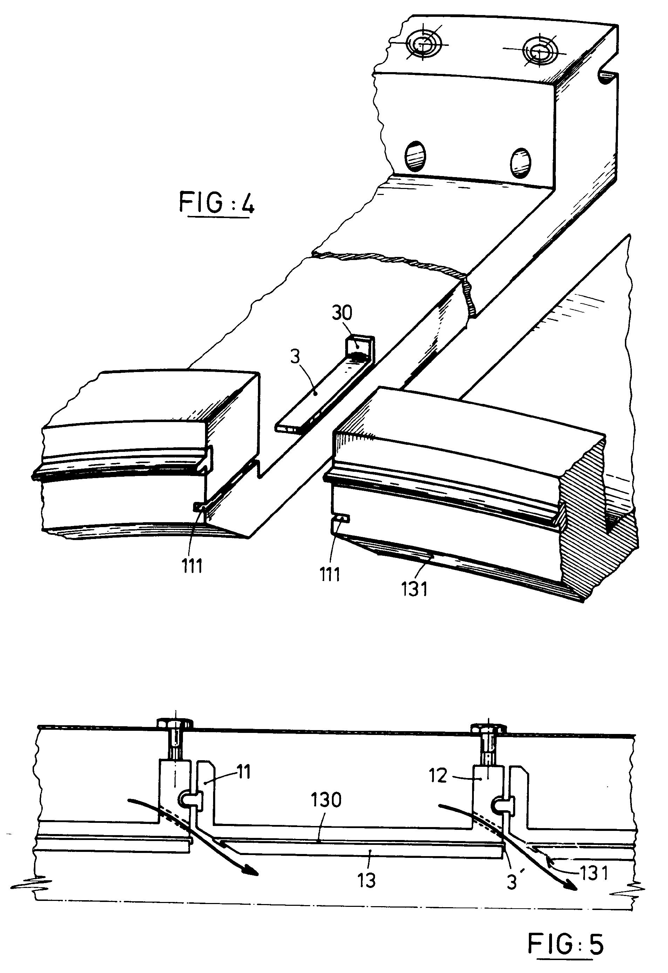

Dans un second mode de réalisation montré à la figure 5, on réalise les rainures de liaison 130 dans les deux bords latéraux de chaque tuile sur toute la longueur du panneau 13. Les barrettes d'assemblage plus longues que dans le mode précédent de réalisation peuvent ainsi assurer également une fonction d'étanchéité longitudinale entre chaque paire de tuiles.

Pour permettre l'assemblage et l'étanchéité de chaque anneau de tuiles ainsi formé avec l'anneau adjacent amont et aval, chaque tuile comporte sur la face amont de la surépaisseur 11 un moyen d'assemblage qui dans une première variante de réalisation est constitué (voir figure 2) d'un bourrelet 110 de forme circulaire porté par la face amont de la surépaisseur 11 et réalisé monobloc avec l'ensemble de la tuile. Le bourrelet 110 vient se loger dans une rainure annulaire 120 réalisée dans la face aval de la surépaisseur aval 12 de la tuile amont qui le précède.

Cette variante de réalisation peut être aisément utilisée lorsque le matériau de confection des tuiles est une céramique obtenue par moulage, les céramiques étant typiquement des matériaux adaptés à l'utilisation de la tuile dans une chemise de protection thermique.

Toutefois, d'autres types de matériaux peuvent être utilisés pour la confection des tuiles, par exemple des matériaux composites du genre à matrice carbone renforcée de fibres de carbone. Dans ce type de matériaux on préférera réaliser l'étanchéité selon un second mode de réalisation (fig.3) dans lequel le moyen de fixation et d'étanchéité est constitué par un joint métallique 110′, par exemple en superalliage résistant à chaud, rapporté dans une rainure annulaire de la surépaisseur amont 11, ou réalisé par insert lors de la fabrication du panneau composite.

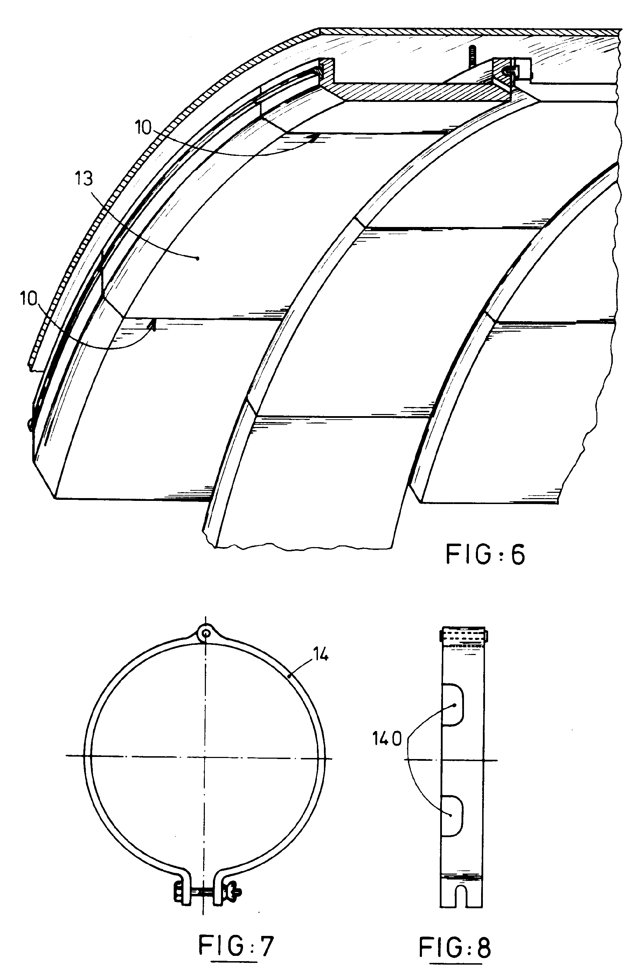

Dans la réalisation représentée aux figures 1 à 6 le bord circulaire intérieur amont du panneau de chaque tuile est chanfreiné en 131 et la surépaisseur aval 12 de chaque tuile est perçée d'une série d'orifices longitudinaux 122 possédant la même inclinaison que le chanfrein amont 131. Les orifices 122 débouchent en amont sur la paroi radialement externe du panneau en amont de la surépaisseur aval 12 et ils traversent ladite surépaisseur aval 12 pour permettre le soufflage du chanfrein de la partie intérieure de la tuile aval adjacente et créer un film pariétal de refroidissement interne de ladite paroi adjacente.

On profite aussi de l'effet de diaphragme que réalise le raidisseur 12 dans la veine située entre les tuiles 1 et le carter 2 du canal où est située la chemise de protection thermique, pour gaver les orifices 122 en air relativement froid prélevé entre les tuiles 1 et le canal 2 afin de refroidir la paroi interne de chaque tuile.

Pour terminer la description des tuiles selon l'invention, il faut ajouter que la surépaisseur annulaire aval de chaque tuile comporte sur son bord circulaire externe des inserts filetés 121 aptes à recevoir des vis 20 de fixation de chaque tuile sur le carter du turboréacteur. Ceci est réalisé quelque soit le matériau de constitution des tuiles, céramique ou composite carbone-carbone.

Le montage/démontage d'un tel ensemble est très simple. Pour le montage, on commence par assembler sur table des anneaux complets en approchant les tuiles bord à bord et en positionant les barrettes 3 dans les rainures 111 ou 130 suivant le type de tuiles utilisées puis en recourbant les extrémités desdites barrettes.

On serre ensuite l'anneau ainsi assemblé (mais dont les tuiles ne sont pas fixées entre elles) au moyen d'un collier 14 de serrage du type présenté aux figures 7 et 8. Un tel collier se présente sous la forme de deux demi-circonférences articulées entre elles en un point et comportant, diamétralement opposés à l'articulation une vis et un écrou à oreilles servant à réunir les deux demi-circonférences.

Suivant le montage ou le démontage par l'amont ou par l'aval du canal, le collier peut-être positionné soit sur les parties amont 11, soit sur les parties aval 12 des panneaux. Dans ce dernier cas, le collier comporte des échancrures 140 permettant de dégager les inserts 121 pour le passage des boulons de fixation.

L'anneau ainsi monté et tenu par le collier 14 est alors positionné dans le canal du turboréacteur. Les boulons 20 sont alors vissés dans les inserts 121 puis le collier 14 est retiré.

De proche en proche, on monte ainsi tous les anneaux les uns au bout des autres, chaque anneau étant décalé d'une demi-largeur de tuile par rapport à l'anneau précédent de telle sorte que les tuiles soient disposées en quinconce. Le démontage s'effectue dans l'ordre inverse des opérations.

La présente invention a pour intérêt de permettre le montage/démontage séparément par l'amont ou par l'aval du canal, d'où une intervention plus rapide en maintenance.

Les tuiles étant toutes identiques, leur interchangeabilité réduit le coût du stockage car il n'est pas nécessaire d'en stocker un grand nombre.

## Revendications

1. Chemise de protection thermique pour canal de transition ou canal de post-combustion de turboréacteur, chemise constituée de tuiles (1) disposées côte à côte pour former des anneaux eux-mêmes disposés bout à bout d'amont en aval, caractérisée en ce que chaque tuile est constituée d'un panneau (13) en forme de portion de cylindre comportant à ses bords amont et aval des surépaisseurs radialement externes (11, 12) et disposées circonférentiellement pour former un raidisseur annulaire, lesdites surépaisseurs amont (11) comportant sur leur face radiale amont, un moyen mâle de fixation et d'étanchéité (110, 110′) coopérant avec un moyen femelle complémentaire (120) de fixation et d'étanchéité porté par la face radiale aval de la surépaisseur aval (12) de la tuile amont adjacente, **en ce que les deux** bords latéraux de chaque tuile comportent une rainure longitudinale (130) s'étendant de l'amont à l'aval pour recevoir une barrette intermédiaire de maintien (3) comportant une extrémité pliée à l'équerre, ladite barrette étant repliée après montage dans les rainures de deux tuiles adjacentes; **en ce que la** surépaisseur annulaire aval (12) de chaque tuile comporte sur son bord circulaire externe des inserts filetés (121) aptes à recevoir des vis (20) de fixation de chaque tuile sur le carter du turboréacteur.

2. Chemise de protection thermique selon la revendication 1, caractérisée en ce que le moyen mâle de fixation et d'étanchéité est constitué par un joint métallique (110′) rapporté dans une rainure annulaire de la surépaisseur amont (11) et coopérant avec une rainure annulaire (120) de la face aval de la surépaisseur aval de la tuile amont adjacente.

3. Chemise de protection thermique selon la revendication 1, caractérisée en ce que le moyen mâle de fixation et d'étanchéité est constitué par une protubérance amont (110),en forme de bourrelet circulaire, portée par la face amont de la surépaisseur amont, ledit bourrelet coopérant avec une rainure annulaire (120) de la face aval de la surépaisseur aval (12) de la tuile amont adjacente.

4. Chemise de protection thermique selon l'une quelconque des revendications 1 à 3 , caractérisée en ce que le bord circulaire intérieur amont (131) du panneau de chaque tuile est chanfreiné et en ce que la surépaisseur aval de chaque tuile est perçée d'une série d'orifices longitudinaux (122) possédant la même inclinaison que le chanfrein amont (131), lesdits orifices débouchant en amont sur la paroi radialement externe du panneau en amont de la surépaisseur aval (12), lesdits orifices traversant ladite surépaisseur aval pour permettre le soufflage du chanfrein (131) de la partie intérieure de la tuile aval adjacente et créer un film pariétal de refroidissement interne de ladite paroi adjacente.

5. Chemise de protection thermique selon l'une quelconque des revendications 1 à 4, caractérisée en ce que chaque tuile est réalisée en matériau céramique.

6. Chemise de protection thermique selon l'une quelconque des revendications 1 à 4, caractérisée en ce que chaque tuile est réalisée en matériau composite à matrice carbone renforcée de fibres de carbone.

## Patentansprüche

1. Wärmeschutzauskleidung für Übergangs- oder Nachbrennerrohre von Turboluftstrahltriebwerken, bestehend aus Ziegeln (1), die seitlich nebeneinander angeordnet sind und Ringe bilden, die ihrerseits von der stromaufwärtigen zur stromabwärtigen Seite stumpf aneinanderstoßend angeordnet sind,
**dadurch gekennzeichnet**,
daß jeder Ziegel aus einer Platte (13) in Form eines Zylinderteils besteht, die an ihren stromaufwärtigen und stromabwärtigen Rändern radial nach außen weisende und in Umfangsrichtung angeordnete Verdickungen (10, 11) aufweisen, die ringförmige Verstärkungen bilden, wobei die stromaufwärtigen Verdickungen (11) an ihrer stromaufwärtigen Stirnfläche ein männliches Befestigungs- und Dichtungsmittel (110; 110′) tragen, das mit einem von der stromabwärtigen Stirnfläche der stromabwärtigen Verdickung (12) des auf der stromaufwärtigen Seite benachbarten Ziegels getragenen komplementären weiblichen Befestigungs- und Dichtungsmittel (120) zusammenwirkt,
daß an den beiden Seitenrändern jedes Ziegels eine von der stromaufwärtigen zur stromabwärtigen Seite verlaufende Längsnut (130) vorgesehen ist, in der ein Zwischenverbindungshaltestab (3) aufgenommen ist, der einen abgewickelten Endbereich besitzt und nach seiner Montage in den Nuten zweier benachbarter Ziegel umgebogen wird,
und daß die stromabwärtige Verdickung (12) jedes Ziegels an ihrem äußeren kreisbogenförmigen Rand mit Gewinde versehene Einsatzstücke (21) aufweist für die Aufnahme von Schrauben (30) zur Befestigung des betreffenden Ziegels an dem Gehäuse des Turboluftstrahltriebwerks.

2. Wärmeschutzauskleidung nach Anspruch 1, dadurch gekennzeichnet, daß das männliche Befestigungs- und Dichtungsmittel aus einer Metalldichtung (110′) besteht, die in eine ringförmige Nut der stromaufwärtigen Verdickung (11) eingesetzt ist und mit einer auf der stromabwärtigen Seite der stromabwärtigen Verdickung des auf der stromaufwärtigen Seite benachbarten Ziegels vorgesehenen ringförmigen Nut (120) zusammenwirkt.

3. Wärmeschutzauskleidung nach Anspruch 1, dadurch gekennzeichnet, daß das männliche Befestigungs- und Dichtungsmittel aus einem stromaufwärtigen Vorsprung (110) in Form eines auf der stromaufwärtigen Stirnfläche der stromaufwärtigen Verdickung angeordneten kreisförmigen Wulstes besteht, der mit einer auf der stromabwärtigen Seite der stromabwärtigen Verdickung des auf der stromaufwärtigen Seite benachbarten Ziegels vorgesehenen ringförmigen Nut (120) zusammenwirkt.

4. Wärmeschutzauskleidung nach einem der Ansprüche 1 bis 3, dadurch gekennzeichnet, daß der stromaufwärtige kreisförmige innere Rand (131) der Platte des Ziegels eine Abfasung besitzt und daß die stromabwärtige Verdickung jedes Ziegels von einer Reihe von Längsöffnungen (122) durchdrungen ist, die dieselbe Neigung haben wie die stromaufwärtige Abfasung (131), wobei diese Öffnungen stromaufwärts an der radial äußeren Wandung der Platte und auf der stromaufwärtigen Seite von deren stromabwärtiger Verdickung (12) münden und die stromabwärtige Verdickung durchdringen, um die Belüftung der Abfasung (131 ) des inneren Teils des stromabwärts benachbarten Ziegels zu ermöglichen und an der genannten benachbarten Wandung einen inneren Kühlungsfilm zu erzeugen.

5. Wärmeschutzauskleidung nach einem der Ansprüche 1 bis 4, dadurch gekennzeichnet, daß die einzelnen Ziegel aus einem keramischen Werkstoff bestehen.

6. Wärmeschutzauskleidung nach einem der Ansprüche 1 bis 4, dadurch gekennzeichnet, daß die einzelnen Ziegel aus einem kohlefaserverstärten Verbundmaterial mit Kohlenstoffgrundmasse bestehen.

## Claims

1. Heat-shielding lining for turboreactor engine transfer duct or afterburner pipe made up of tiles (1) arranged side by side to form rings themselves arranged end to end from upstream to downstream, characterised in that each tile is made up of a panel (13) in the shape of a portion of a cylinder comprising at its upstream and downstream edges radially outer flanges (11, 12) and arranged circumferentially to form an annular stiffener, the said upstream flanges (11) comprising on their upstream radial face a male means of fixing and sealing (110, 110′) engaging with a complementary female means (120) of fixing and sealing carried on the downstream radial face of the downstream flange (12) of the adjacent upstream tile, in that the two lateral edges of each tile comprise a longitudinal keyway (130) extending from upstream to downstream to take an intermediate retaining key (3) comprising one end bent over at right angles, the said key being bent over after being fitted into the keyways of two adjacent tiles, in that the downstream annular flange (12) of each tile comprises on its outer circular rim tapped inserts (121) able to receive bolts (20) for fixing each tile to the casing of the turboreactor engine.

2. Heat-shielding lining in accordance with Claim 1, characterised in that the male means of fixing and sealing is constituted by a metallic joint (110′) set into an annular groove in the upstream flange (11) and engaging with an annular groove (120) in the downstream face of the downstream flange of the adjacent upstream tile.

3. Heat-shielding lining in accordance with Claim 1, characterised in that the male means of fixing and sealing is constituted by an upstream protuberance (110), in the form of a circular bead carried on the upstream face of the upstream flange, the said bead engaging with an annular groove (120) in the downstream face of the downstream flange (12) of the adjacent upstream tile.

4. Heat-shielding lining in accordance with any one of Claims 1 to 3, characterised in that the upstream inner circular edge (131) of the panel of each tile is chamfered and in that the downstream flange of each tile is pierced with a series of longitudinal holes (122) having the same angle of inclination as the upstream chamfer (131), the said holes opening upstream onto the radially outer wall of the panel upstream of the downstream flange (12), the said holes passing through the said downstream flange to allow the forced ventilation of the chamfer (131) on the inner part of the adjacent downstream tile and create a boundary layer flow for the inner cooling of the said adjacent wall.

5. Heat-shielding lining in accordance with any one of Claims 1 to 4, characterised in that each tile is made of a ceramic material.

6. Heat-shielding lining in accordance with any one of Claims 1 to 4, characterised in that each tile is made of a composite material with a carbon matrix reinforced with carbon fibre.
